# FASCICULE DE BREVET EUROPEEN

(11) **EP 0 671 858 B1**
(45) Date de publication et mention de la délivrance du brevet: **22.10.2003**
(21) Numéro de dépôt: 95400472.7
(22) Date de dépôt: 03.03.1995
(51) Int. Cl.: H04Q 7/36, H04B 7/26

(54) **Plan de fréquences pour un système cellulaire de radiocommunications mobiles à sauts de fréquences**
Frequenzplan für ein zellulares mobiles Funksystem mit Frequenzsprung
Frequency-plan for a frequency-hopped mobile cellular radio-communication system

(30) Priorité: 08.03.1994 FR 9402661
(43) Date de publication de la demande: 13.09.1995
(73) Titulaire: ALCATEL, 75008 Paris (FR)
(72) Inventeur: Dupuy, Pierre, F-75017 Paris (FR)
(74) Mandataire: El Manouni, Josiane

(56) Documents cités:
- EP-A- 0 189 695
- WO-A-93/22849
- IEEE JOURNAL ON SELECTED AREAS IN COMMUNICATION, vol.5, no.5, Juin 1987, NEW YORK US pages 835 - 848 DORNSTETTER ET AL. 'Cellular Efficiency with Slow Frequency Hopping: Analysis of the Digital SFH900 Mobile System'
- IEEE INTERNATIONAL CONFERENCE ON COMMUNICATIONS, vol.2, Juin 1986, TORONTO, CA pages 1151 - 1155 DORNSTETTER ET AL. 'The Digital Cellular SFH 900 System'

## Description

La présente invention concerne un système cellulaire de radiocommunications mobiles.

Dans les systèmes cellulaires de radiocommunications mobiles connus, les communications avec les stations mobiles passent par des moyens d'émission/réception tels que des stations d'émission/réception de base (également appelées stations de base) installées à poste fixe.

La zone de couverture géographique d'une station de base est appelée cellule, et correspond à la zone dans laquelle le champ électrique reçu par une station mobile est suffisant pour assurer son fonctionnement normal. Schématiquement, ces cellules sont représentées par des hexagones.

Chaque cellule dispose d'une fréquence ou d'un jeu de plusieurs fréquences deux à deux distinctes pour l'échange des signaux radioélectriques entre la station de base et les stations mobiles se trouvant sous sa couverture. Le nombre de fréquences attribué à chaque cellule dépend en théorie du trafic de communications escompté à l'intérieur de cette cellule : pour les cellules à faible trafic, une seule fréquence est a priori nécessaire, alors que pour les cellules à fort trafic, au moins deux fréquences distinctes sont nécessaires. De plus, il existe en général une fréquence par sens de transmission, mais cela n'est pas obligatoire.

Au-delà d'une distance limite depuis la station de base, le champ électrique reçu est très faible ; les interférences entre deux signaux transmis sur la même fréquence et séparés d'au moins la distance limite précitée sont donc pratiquement imperceptibles. Il est par conséquent possible de réutiliser les fréquences. Cette réutilisation conduit à la constitution de groupes (également appelés motifs) de cellules, le nombre de cellules par motif (au moins deux) dépendant du nombre de fréquences disponibles.

Toutes les fréquences utilisées au sein d'un motif donné sont deux à deux distinctes, et les motifs, identiques les uns aux autres, c'est-à-dire constitués de cellules identiques, sont répétés périodiquement de manière à assurer la couverture radio de l'espace souhaité. En général, cette répétition est régulière, c'est-à-dire que les positions relatives des motifs les uns par rapport aux autres sont identiques. Toutefois, la régularité de la répétition n'est pas obligatoire, notamment s'il faut s'adapter aux irrégularités de l'espace à couvrir.

En outre, dans les systèmes connus, toutes les cellules de même rang, c'est-à-dire les cellules appartenant à des motifs différents et occupant à l'intérieur de ces motifs des positions identiques relativement aux autres cellules du motif, utilisent des fréquences ou jeux de fréquences identiques.

Le spectre des fréquences disponibles pour les radiocommunications mobiles étant limité, un compromis doit être trouvé entre l'utilisation d'un nombre minimal de fréquences et la qualité des signaux radioélectriques transmis, notamment des signaux contenant de la parole.

En effet, la qualité de ces signaux peut en pratique être affectée par deux types principaux de perturbations.

Ces perturbations sont causées en premier lieu par les trajets multiples des ondes radioélectriques : le trajet de propagation des ondes radioélectriques varie en fonction des obstacles rencontrés (bâtiments, relief du terrain, masses métalliques, etc...), ce qui entraîne la réception par le récepteur d'un même signal mais décalé dans le temps. Cette situation entraîne la création d'un système d'ondes stationnaires provoquant au niveau des noeuds une disparition totale ou partielle du signal résultant. Ce phénomène est appelé évanouissement (ou fading en anglais) de Rayleigh.

L'emplacement des noeuds du système d'ondes stationnaires est bien évidemment lié à la fréquence utilisée pour la transmission des signaux et à la position de l'émetteur et du récepteur par rapport aux obstacles, et plus précisément à la longueur d'onde du signal transmis et aux distances respectives entre l'obstacle et l'émetteur et entre l'obstacle et le récepteur, qui déterminent l'ampleur de l'évanouissement.

Au-delà d'une limite inférieure du niveau du signal reçu, ce dernier n'est plus exploitable par le récepteur, c'est-à-dire que le contenu de l'information transmise ne parvient pas au destinataire. On comprend bien que la qualité des signaux s'en trouve fortement dégradée, notamment lorsque le signal est toujours transmis sur la même fréquence.

Ainsi, pour réduire les effets du phénomène d'évanouissement, il est connu d'effectuer des changements de fréquences cycliques ; ceux-ci permettent de réduire la durée des évanouissements et rendent donc le phénomène imperceptible à l'utilisateur. Ce principe est appelé saut de fréquences cyclique.

Par application de ce principe, chaque cellule du système est associée à au moins deux fréquences distinctes, et la fréquence des signaux radio échangés entre une station mobile et une station de base change au cours du temps : toutes les fréquences du jeu de fréquences associé à la cellule concernée sont successivement utilisées les unes après les autres au cours de la transmission des signaux radio, de sorte que la succession dans le temps de ces fréquences est cyclique et connue de la station mobile et de la station de base.

Ainsi, lorsque le phénomène d'évanouissement se produit, pour une transmission de signaux donnée, sur une fréquence du jeu de fréquences associé à la cellule concernée, ce jeu de fréquences comprenant n fréquences utilisées, selon le principe du saut de fréquences cyclique, l'une après l'autre dans un ordre prédéterminé, l'évanouissement ne se produit que pendant une fraction du temps égale à 1/n pendant chaque cycle, de sorte que la qualité de la transmission est nettement améliorée par rapport au cas où la transmission des signaux ne serait effectuée que sur la fréquence où se produit le phénomène d'évanouissement.

Par ailleurs, les perturbations affectant la qualité des signaux radioélectriques transmis sont également causées par les interférences. En effet, du fait de la limitation du spectre disponible et du faible rayon des cellules dans certaines zones où le trafic est important, il arrive que deux cellules relativement proches l'une de l'autre utilisent la même fréquence ou le même jeu de fréquences.

Dans ce cas, les transmissions de signaux radio entre stations de base et stations mobiles au sein de ces deux cellules risquent d'interférer entre elles, conduisant à un brouillage quasiment complet des signaux radio, et par conséquent à une dégradation très importante de la qualité de la transmission. Ce phénomène est connu sous le nom d'interférence sur le canal utile.

Bien évidemment, le problème de l'interférence sur le canal utile est général, c'est-à-dire qu'il n'est pas lié à l'utilisation, dans le système de radiocommunications mobiles considéré, du principe du saut de fréquences cyclique.

Toutefois, le saut de fréquences cyclique, s'il permet d'améliorer la qualité de la transmission en présence de phénomènes d'évanouissement, n'est pas satisfaisant pour ce qui est de l'interférence sur le canal utile. En effet, il peut arriver qu'une transmission de signaux radio débute en même temps dans des cellules de même rang, qui, on le rappelle, sont associées au même jeu de fréquences. Dans ce cas, le cycle suivi, qui est en général le même pour les cellules de même rang est exactement le même pendant cette transmission au sein de chacune de ces cellules (ceci peut arriver au moins une fois sur n, n étant le nombre de fréquences du jeu de fréquences associé à la cellule concernée). Le problème de l'interférence sur le canal utile n'est donc pas évité dans de tels cas, qui sont relativement courants, par l'application du principe du saut de fréquences cyclique.

De manière générale, dans les systèmes de radiocommunications mobiles connus, les motifs utilisés comprennent sept cellules chacun, une cellule centrale et six cellules périphériques. Dans ce cas particulier, chaque cellule est "proche" de six cellules de même rang, qui constituent donc six sources potentielles de brouillage total des transmissions.

Pour réduire les effets de l'interférence sur le canal utile, il est connu d'utiliser le principe du saut de fréquences aléatoire. L'application de ce principe est exclusive de celle du principe du saut de fréquences cyclique.

Selon le principe du saut de fréquences aléatoire, au lieu de changer au cours du temps de manière cyclique, la fréquence de transmission des signaux radio change de manière aléatoire, selon une loi de saut aléatoire attribuée par le réseau à chaque canal lors de son activation, en utilisant les fréquences du jeu de fréquences associé à la cellule concernée. En pratique, le saut de fréquences n'est pas réellement aléatoire. En effet, les fréquences ne sont pas tirées au hasard au cours de la transmission des signaux, mais suivent une loi de type aléatoire prédéterminée de sorte que le saut de fréquences peut être qualifié de "pseudo-aléatoire" ; on utilise en fait le qualificatif "aléatoire" pour signifier que les séquences successives sont décorrélées partiellement ou en totalité les unes des autres.

On notera que dans certains systèmes, et notamment dans les systèmes conformes à la norme GSM, les signaux contenant de la signalisation doivent toujours être portés par une même fréquence, dite fréquence de signalisation ou fréquence balise. Pour la transmission de tels signaux, le principe du saut de fréquences cyclique ou aléatoire n'est donc pas appliqué.

Grâce au principe du saut de fréquences aléatoire, la probabilité pour deux transmissions dans des cellules proches utilisant les mêmes jeux de fréquences d'interférer l'une avec l'autre est sensiblement réduite puisque, du fait du caractère aléatoire de la succession dans le temps des fréquences, le risque que deux transmissions de signaux utilisent à chaque instant, pendant une période donnée, la même fréquence, est diminué de manière significative (en pratique, il est sensiblement inférieur à 1/n, n étant le nombre de fréquences disponibles dans chaque cellule). En fait, l'utilisation du principe du saut de fréquences aléatoire égalise les niveaux d'interférences sur chaque fréquence en répartissant les sources de brouillage.

Toutefois, l'application du principe du saut de fréquences aléatoire pose un problème. Ce problème réside dans le fait qu'une fréquence sur laquelle se produit le phénomène d'évanouissement pour une transmission de signaux donnée risque d'être "surreprésentée", c'est-à-dire utilisée de nombreuses fois successives au cours d'une période relativement courte, puisque les fréquences du jeu de fréquences associé à la cellule concernée ne sont pas utilisées les unes après les autres et de manière cyclique.

Par exemple, si le jeu de fréquences comprend les fréquences f₁, f₂ et f₃, f₁ étant la fréquence à laquelle se produit le phénomène d'évanouissement, et si la séquence de fréquences lors du saut aléatoire est f₁ f₁ f₁ f₂ f₁ f₃ f₁ f₁ ..., les instants au cours desquels la transmission a une qualité nettement dégradée sont plus nombreux que par rapport au cas où l'on applique le saut de fréquences cyclique.

Compte tenu de ce qui précède, la présente invention a pour but de mettre au point un système cellulaire de radiocommunications mobiles dans lequel le spectre des fréquences disponibles est utilisé au mieux tout en réduisant autant que possible les dégradations de la qualité des signaux radioélectriques transmis dues aux phénomènes d'évanouissement et d'interférence sur le canal utile.

On connaît par ailleurs, par le document IEEE journal On Selected Areas in Communication, vol. 5, n°5, juin 1987, New York US, pages 835-848, DORNSTETTER ET AL. "Cellular Efficiency with Slow Frequency Hopping : Analysis of the Digital SFH 900 Mobile System", un système cellulaire de radiocommunications mobiles dans lequel les jeux de fréquences associés à deux cellules quelconques appartenant à des motifs distincts et adjacents, et occupant à l'intérieur de ces motifs respectifs la même position par rapport aux autres cellules de ces motifs, sont partiellement identiques, c'est à dire comportent au moins une fréquence identique et au moins une fréquence distincte.

Le but du système tel que décrit dans ce document n'est cependant pas d'utiliser au mieux le spectre de fréquences disponibles tout en réduisant autant que possible les dégradations de la qualité des signaux radioélectriques transmis, dues aux phénomènes d'évanouissement et d'interférence sur le canal utile, mais de permettre l'utilisation de motifs à faible nombre de cellules (notamment à 3 cellules), en dépit du fort taux d'interférences sur le canal utile qui existe habituellement en pareil cas, et ce en accroissant le nombre de fréquences disponibles et en utilisant des jeux de fréquences qui ne soient plus alors totalement identiques, mais seulement partiellement identiques, à chaque nouvelle distance de réutilisation.

La présente invention utilise la caractéristique ainsi rappelée de jeux de fréquences partiellement identiques associés à des cellules dites de même rang, mais pour réaliser un système cellulaire de radiocommunications mobiles dans lequel le spectre des fréquences disponibles est utilisé au mieux tout en réduisant autant que possible les dégradations de la qualité des signaux radioélectriques transmis dues aux phénomènes d'évanouissement et d'interférence sur le canal utile.

En outre, en choisissant un nombre P de motifs pour lesquels les jeux de fréquences ainsi associés aux cellules de même rang sont partiellement identiques, qui soit en relation particulière avec le nombre N de cellules d'un motif, l'invention permet d'obtenir un résultat supplémentaire que ne peut pas permettre d'obtenir le système décrit dans le document analysé ci-dessus, et qui est une meilleure diversité géographique des sources de brouillage.

La présente invention a ainsi pour objet un système cellulaire de radiocommunications mobiles comprenant une pluralité de cellules regroupées en motifs identiques d'au moins deux cellules chacun, répétés périodiquement dans l'espace, et tel que :
- chaque cellule est associée à des moyens d'émission/réception de base destinés à émettre ou à recevoir des signaux radio à destination ou en provenance de stations mobiles lorsque ces dernières se trouvent dans une zone géographique coïncidant sensiblement avec la cellule associée auxdits moyens d'émission/réception,
- chacun desdits moyens d'émission/réception émet et reçoit des signaux radio par l'intermédiaire d'un jeu de fréquences associé à ladite cellule associée, et comportant au moins deux fréquences distinctes, toutes les fréquences de jeux de fréquences associés aux cellules d'un même motif étant deux à deux distinctes,
- la fréquence des signaux radio échangés entre une station mobile et les moyens d'émission/réception d'une cellule change au cours du temps de sorte que plusieurs des fréquences du jeu de fréquences associé à ladite cellule sont successivement utilisées au cours de la transmission desdits signaux radio,
   - les jeux de fréquences associés à deux cellules quelconques appartenant à des motifs distincts et adjacents, et occupant à l'intérieur de ces motifs respectifs la même position par rapport aux autres cellules de ces motifs, ces deux cellules étant dites de même rang, sont partiellement identiques, c'est-à-dire qu'ils comportent au moins une fréquence identique et au moins une fréquence distincte,
ledit système étant caractérisé en ce que le plan de ce système de radiocommunications mobiles est obtenu en superposant les plans de plusieurs systèmes de radiocommunications mobiles ayant chacun un nombre différent de cellules par motif, ces systèmes de radiocommunications mobiles étant des systèmes classiques, c'est-à-dire dans lesquels les jeux de fréquences associés à des cellules de même rang sont identiques.

Grâce au système selon l'invention, deux cellules associées exactement aux mêmes fréquences sont beaucoup plus éloignées l'une de l'autre que dans les systèmes classiques où les cellules de même rang de motifs adjacents sont associées au même jeux de fréquences. Ainsi, le brouillage total d'une transmission n'existe pratiquement plus.

En revanche, pour une cellule donnée du système selon l'invention, il existe un plus grand nombre de sources de brouillage, mais ces sources de brouillage sont partielles car, tout en appartenant à des motifs adjacents à celui auquel appartient la cellule concernée, elles n'utilisent que partiellement les mêmes fréquences que cette dernière.

Lors d'une transmission de signaux radio entre une station mobile et la station de base de cette cellule, ces sources de brouillage n'agissent en tant que telles que durant une partie du temps, du fait de l'application dans le système selon l'invention d'un saut de fréquences et puisque les jeux de fréquences associés à ces sources de brouillage ne sont que partiellement identiques à celui de la cellule concernée. Ainsi, la puissance des interférences, au lieu d'être concentrée en permanence sur un même cycle de fréquences, est répartie dans le temps sur plusieurs cycles de fréquences, de sorte que le niveau des interférences se trouve partout en-dessous du seuil acceptable pour que les signaux transmis soient exploitables.

En outre, si l'on applique le principe du saut de fréquences cyclique, les conséquences du phénomène d'évanouissement sur la qualité des signaux transmis sont réduites.

Selon un mode de réalisation avantageux, le motif étant un motif à N cellules, il existe dans le système selon l'invention P motifs à N cellules pour lesquels les jeux de fréquences associés aux cellules de même rang sont partiellement identiques.

N et P peuvent être premiers entre eux.

On obtient ainsi un "motif de motifs" qui comporte P motifs que l'on peut qualifier d'élémentaires.

En pratique, l'invention permet donc d'agrandir virtuellement la taille du motif utilisé. Toutefois, à la différence d'un motif classique dans lequel toutes les fréquences utilisées sont deux à deux distinctes, dans le "motif de motifs" obtenu grâce à l'invention, il y a réutilisation partielle de certaines fréquences.

Ceci permet avantageusement d'obtenir un "motif" à N.P cellules en utilisant un nombre de fréquences nettement inférieur au nombre de fréquences nécessaire si toutes les fréquences de ce motif à N.P. cellules étaient deux à deux distinctes. On utilise ainsi au mieux le spectre des fréquences disponibles.

Selon un autre mode de réalisation avantageux, le motif étant un motif à N cellules, il existe P*Q motifs à N cellules pour lesquels les jeux de fréquences associés aux cellules de même rang sont partiellement identiques.

Par exemple, N est égal à 9, P est égal à 4 et Q est égal à 13.

Le système selon l'invention peut avantageusement utiliser le principe de l'accès multiple à répartition dans le temps (AMRT). Dans ce cas, le changement de fréquences peut être effectué par exemple à chaque intervalle de temps.

La présente invention concerne également un organe d'exploitation d'un système cellulaire de radiocommunications mobiles tel que défini précédemment, comprenant des moyens d'attribution de fréquences à chacune des cellules du système, ces moyens d'attribution étant tels que les jeux de fréquences associés à deux cellules quelconques appartenant à des motifs distincts et adjacents, et occupant à l'intérieur de ces motifs respectifs la même position par rapport aux autres cellules de ces motifs sont partiellement identiques, c'est-à-dire qu'ils comportent au moins une fréquence identique et au moins une fréquence distincte, et tels que le plan de ce système de radiocommunications mobiles est obtenu en superposant les plans de plusieurs systèmes de radiocommunications mobiles ayant chacun un nombre différent de cellules par motif, ces systèmes de radiocommunications mobiles étant des systèmes classiques, c'est-à-dire dans lesquels les jeux de fréquences associés à des cellules de même rang sont identiques.

D'autres caractéristiques et avantages de la présente invention apparaîtront dans la description suivante d'un mode de réalisation particulier de l'invention, donné à titre illustratif et nullement limitatif.

Dans les figures suivantes :
- la figure 1 représente de manière très schématique un système cellulaire de radiocommunications mobiles classique utilisant un motif à 7 cellules,
- la figure 2 représente de manière très schématique un système cellulaire de radiocommunications mobiles classique utilisant un motif à 9 cellules,
- la figure 3 représente de manière très schématique un système cellulaire de radiocommunications mobiles selon l'invention,
- la figure 4 est un schéma-bloc des éléments principaux de l'infrastructure d'un système cellulaire de radiocommunications mobiles entrant dans la mise en oeuvre de la présente invention.

Dans toutes ces figures, les éléments communs portent les mêmes numéros de référence.

Par ailleurs, ces figures correspondent plus particulièrement, à titre d'exemple mais avantageusement, au cas où le saut de fréquences utilisé est un saut de fréquences cyclique.

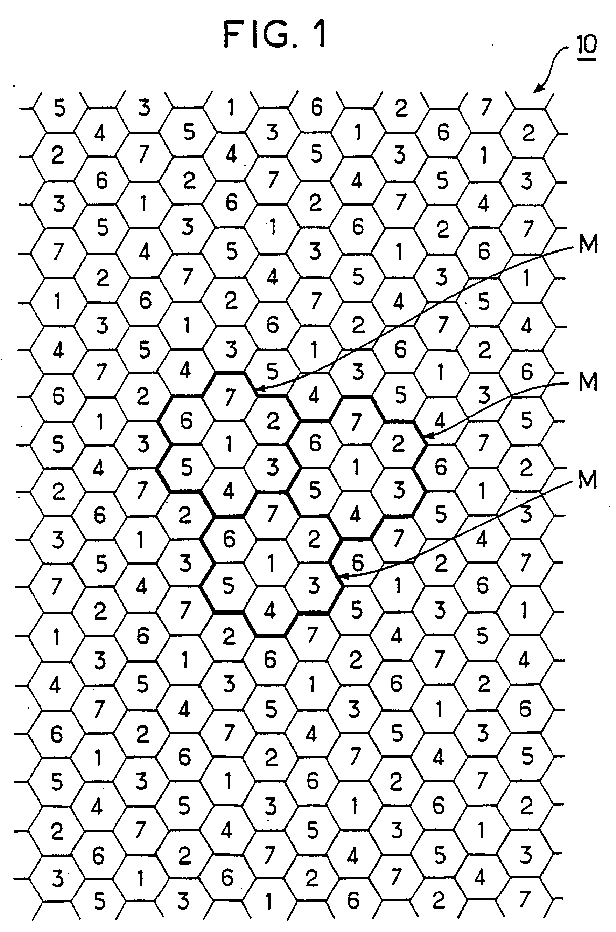

On voit en figure 1 le plan d'un système cellulaire classique de radiocommunications mobiles 10. On rappelle que, schématiquement, les cellules d'un tel système peuvent être représentées sous forme d'hexagones.

Le plan du système 10 est constitué par la répétition régulière dans l'espace d'un motif M comprenant sept cellules référencées 1 à 7. La cellule 1 se trouve au centre du motif M, et les cellules 2 à 7 entourent la cellule 1. Les contours de chaque motif M sont représentés en trait épais sur la figure 1.

A titre d'exemple, on supposera que chacune des cellules 1 à 7 est associée à un jeu de trois fréquences, les 21 fréquences ainsi utilisées au sein d'un motif M donné étant deux à deux distinctes. Chacun de ces jeux de fréquences sera désigné dans la suite par la même référence que la cellule du motif M à laquelle il est associé.

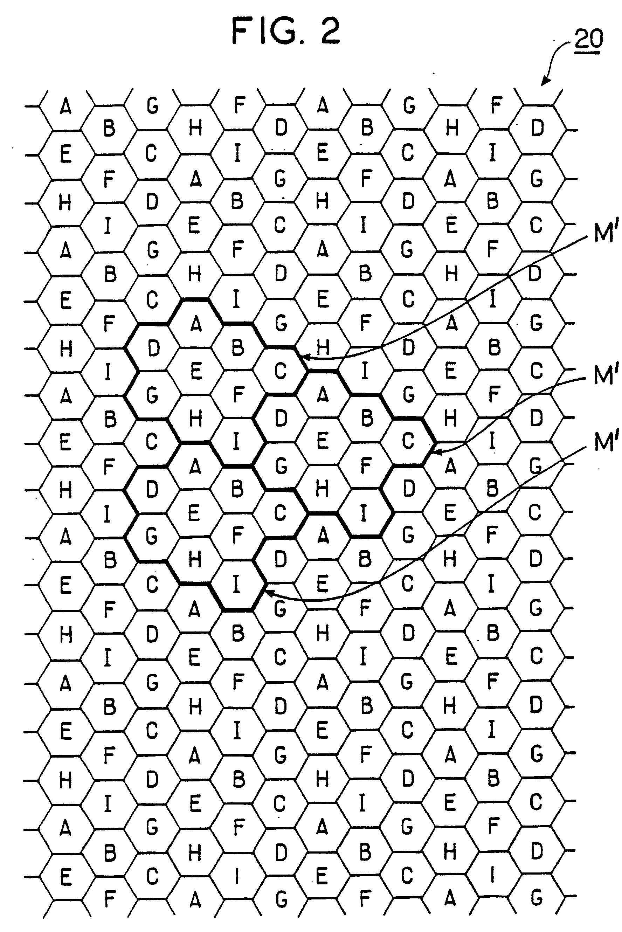

On a montré en figure 2 le plan d'un autre système cellulaire classique de radiocommunications mobiles 20.

Le plan du système 20 est constitué par la répétition régulière d'un motif M' comprenant neuf cellules référencées A à I. Les contours de chaque motif M' sont représentés en trait épais sur la figure 2.

Toujours à titre d'exemple, on supposera que chacune des cellules A à I est associée à une seule fréquence. Chacune de ces fréquences sera désignée dans la suite par la même référence que la cellule du motif M' à laquelle elle est associée.

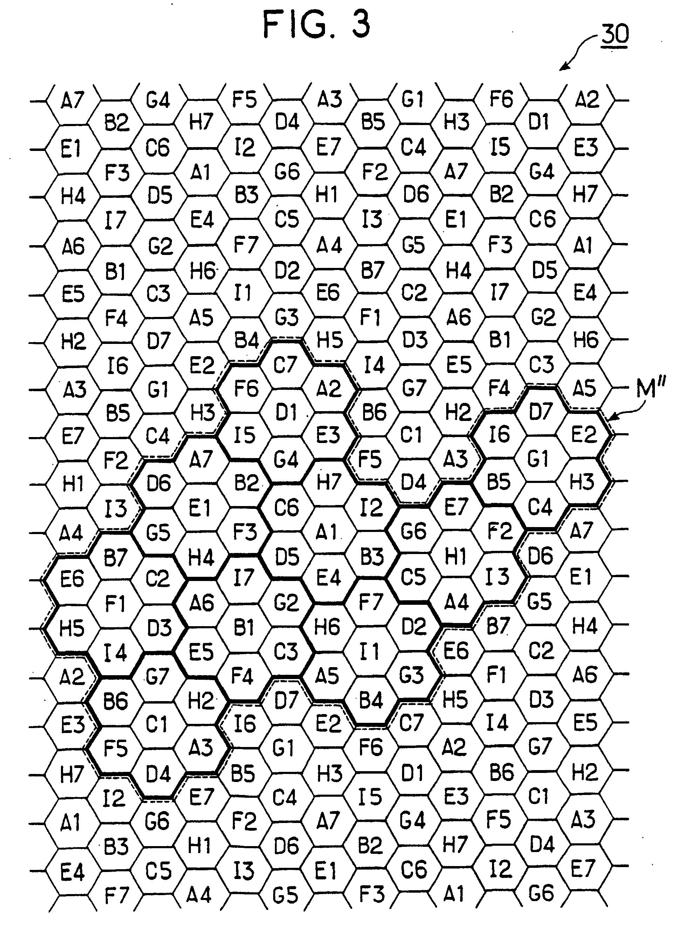

Le plan d'un système cellulaire de radiocommunications mobiles 30 selon l'invention est montré en figure 3. Ce plan a été obtenu en superposant les plans des systèmes 10 et 20. Les références des cellules du système 30 sont obtenues en juxtaposant les références des cellules superposées des systèmes 10 et 20 qui leur correspondent, en commençant par la lettre. Par exemple, la cellule résultant de la superposition des cellules 1 et A est référencée A1. La même convention est appliquée aux jeux de fréquences résultants.

Les contours des motifs M initiaux sont toujours représentés en trait épais, car les motifs M constituent le motif de base du système 30 selon l'invention. Toutefois, à la différence du système classique 10, et du fait de la superposition des plans des systèmes 10 et 20, les cellules de même rang de deux motifs M adjacents n'utilisent pas exactement les mêmes jeux de fréquences.

Ainsi par exemple, les cellules A1 et B1, qui sont les cellules centrales de deux motifs adjacents, ont en commun les fréquences du jeu de fréquences 1, mais leurs jeux de fréquences associés complets diffèrent par les fréquences A et B.

On a ainsi créé un "motif de motifs" à 63 cellules (9*7), référencé M" en figure 3 et dont les contours sont représentés en trait interrompu. Chaque cellule est associée à un jeu de 4 fréquences (3+1). A la différence d'un motif classique, toutes les fréquences utilisées à l'intérieur de ce "motif" ne sont pas deux à deux distinctes.

On utilise donc moins de fréquences que dans un motif classique à 63 cellules chacune associée à un jeu de 4 fréquences, les 252 (63*4) fréquences utilisées dans ce motif étant deux à deux distinctes. En effet, le motif M" selon l'invention n'utilise que 30 (7*3 + 9) fréquences différentes.

On va comparer à présent les performances en termes de qualité des signaux radio transmis dans un système utilisant un motif à 63 cellules et 252 fréquences et dans un système selon l'invention.

Il est bien évident que, à taille des cellules identique, les dégradations dues aux interférences sur le canal utile sont bien moindres dans un système utilisant des motifs à 63 cellules et 252 fréquences que dans un système utilisant des "motifs" à 63 cellules et 30 fréquences. En effet, dans un système tel que le système de la figure 3, la quantité de sources de brouillage potentielles rapprochées est importante à l'intérieur même du motif. Toutefois, comme on l'a vu, ces sources de brouillage sont des sources de brouillage partielles puisque leurs jeux de fréquences diffèrent tous partiellement les uns des autres et puisque l'on applique le saut de fréquences cyclique.

De cette manière, on obtient, tout en appliquant uniquement le principe du saut de fréquences cyclique, les avantages combinés du saut de fréquences cyclique et du saut de fréquences aléatoire.

En effet, il est bien connu que l'avantage du saut de fréquences aléatoire appliqué seul dans un système classique réside dans le fait que le niveau des interférences varie au cours d'une transmission de signaux donnée entre une station mobile et une station de base, alors que le niveau des interférences est pratiquement constant lorsque l'on applique le principe du saut de fréquences cyclique. Le saut de fréquences aléatoire permet de moyenner les interférences.

Ceci s'explique par le fait que le niveau des interférences perçues au cours d'une transmission est la moyenne des niveaux des interférences causées par de nombreuses autres transmissions. Il en résulte que plus il y a de sources de brouillage, meilleur est le système en termes d'interférences. C'est ce que l'on appelle la diversité de brouilleurs.

Dans le système tel que celui de la figure 3, la diversité de brouilleurs est obtenue non pas en appliquant le principe du saut de fréquences aléatoire, mais en réutilisant partiellement certaines fréquences au sein de motifs adjacents et en appliquant à ces fréquences un saut cyclique.

Les avantages du saut de fréquences aléatoire sont donc obtenus dans les systèmes selon l'invention grâce au fait que les interférences varient au cours du temps (par exemple d'un intervalle de temps à l'autre pour des systèmes utilisant le principe de l'AMRT).

Dans les systèmes conformes à la norme GSM, qui mettent en oeuvre le principe de l'AMRT, il doit exister dans chaque cellule une fréquence, dite fréquence de signalisation ou fréquence balise, réservée en partie (en général sur le premier intervalle de temps) à la transmission de signaux contenant de la signalisation entre les stations mobiles et la station de base. La norme GSM prescrit qu'il n'est pas autorisé d'appliquer le saut de fréquence sur le canal logique caractérisé par le premier intervalle de temps de chaque trame et la fréquence balise.

Par conséquent, dans l'exemple donné ci-dessus de mise en oeuvre de la présente invention, il faut respecter les prescriptions de la norme dans le cas où le système considéré est un système GSM. Cela n'empêche pas que, pour les intervalles de temps autres que le premier intervalle de temps de chaque trame sur la fréquence balise, c'est-à-dire pour les canaux logiques autres que le canal de signalisation, l'application du principe de saut de fréquences reste possible.

La mise en oeuvre de l'invention dans les systèmes cellulaires de radiocommunications mobiles conformes à la norme GSM déjà existants ne demande aucune modification des stations mobiles ni des stations de base. En effet, l'équipement est déjà prévu dans ces dernières, en accord avec la norme GSM, pour permettre l'application de l'un ou l'autre des principes de saut de fréquences.

Etant donné que l'invention met en oeuvre de manière classique le principe du saut de fréquences et que seule change par rapport à l'art antérieur la répartition des fréquences, il n'est donc pas nécessaire d'apporter des modifications au niveau des stations mobiles et des stations de base.

En revanche, au sein de l'organe du système chargé de l'exploitation et de la maintenance, il est nécessaire de modifier le logiciel de planification des fréquences en accord avec le principe de la présente invention.

Cet organe d'exploitation et de maintenance transmet cette planification, pour qu'elle soit appliquée sur le terrain, aux différents contrôleurs de stations de base ayant en charge chacun un groupe de stations de base prédéterminé.

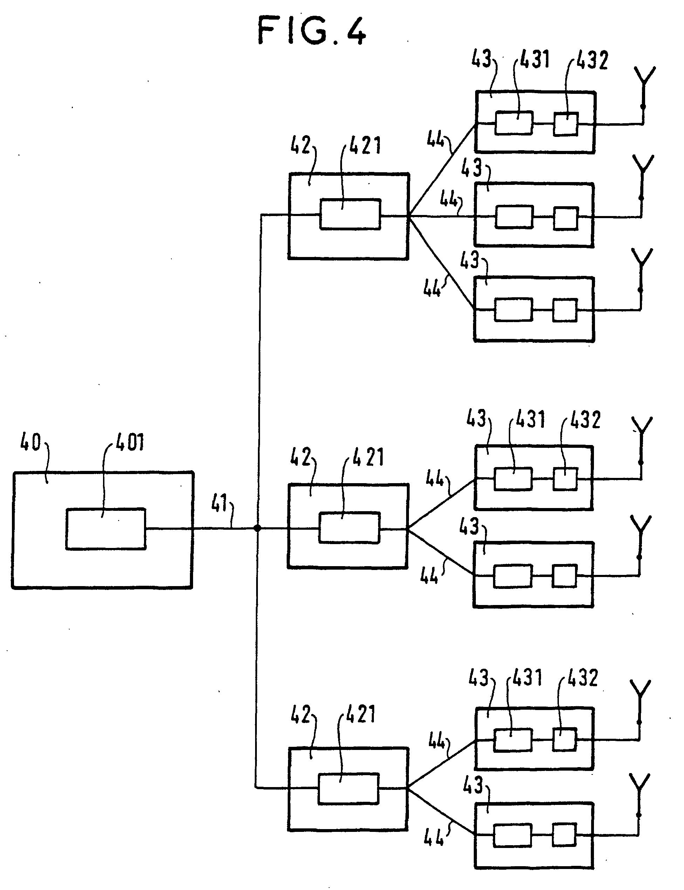

On a représenté en figure 4 un organe d'exploitation et de maintenance 40, dont le logiciel de planification est référencé 401. L'organe 40 est relié, en général par voie filaire 41, à plusieurs contrôleurs de stations de base (BSC) 42 (trois sont représentés en figure 4), eux-mêmes reliés aux stations de base 43 dont ils sont en charge par voie filaire 44. On remarquera que seuls les éléments en rapport direct avec la mise en oeuvre de l'invention ont été représentés en figure 4.

Le logiciel de planification 401 programmé en accord avec le principe de la présente invention pilote des moyens de contrôle 421 appartenant aux contrôleurs BSC pour que les fréquences adéquates soient attribuées à chacune des cellules (c'est-à-dire à chacun des moyens de commande adaptés 431 au sein des stations de base 43, eux-mêmes reliés aux moyens d'émission/réception 432 de ces dernières).

Pour des systèmes dans lesquels l'application d'un principe de saut de fréquences n'était pas prévue au départ, il est nécessaire d'apporter en conséquence les modifications au niveau des stations mobiles, des stations de base, et des organes d'exploitation, c'est-à-dire :
- d'installer au niveau de la station de base les émetteurs/récepteurs supplémentaires nécessaires (il en faut autant que de fréquences dans le jeu de fréquences associé), ainsi que les moyens de commutation adaptés lorsque ceux-ci n'existent pas déjà, ou bien d'équiper le ou les émetteurs/récepteurs de la station de base de synthétiseurs de fréquences,
- de faire de même au niveau des stations mobiles,
- de modifier le logiciel d'exploitation de manière à rendre la planification des fréquences conforme à celle prévue dans la présente invention.

Bien évidemment, le mode de mise en oeuvre donné ci-dessus ne constitue qu'un exemple d'application de l'invention.

Notamment, il est possible d'obtenir des systèmes conformes à la présente invention en "superposant" plus de deux systèmes classiques.

De même, il n'est pas nécessaire que les nombres de cellules des systèmes superposés soient premiers entre eux, même si c'est ainsi que l'on obtient une utilisation optimale des fréquences.

Par exemple, on peut obtenir un plan de système cellulaire conforme à la présente invention en superposant les plans de trois systèmes classiques à respectivement 9, 12 et 13 cellules. Dans ce cas, on a créé un "motif de motifs" à 468 cellules (468 = 9*4*13, 36 [9*4] étant le plus petit commun multiple de 9 et 12), le motif de base du système selon l'invention étant un motif à 9 cellules.

Si chaque cellule de ce motif à 9 cellules est associée à trois fréquences (par exemple du fait que, dans chacun des systèmes classiques utilisés dans la superposition, une seule fréquence est associée à chaque cellule), les jeux partiellement identiques de deux cellules de même rang appartenant à des motifs adjacents diffèrent alors par deux fréquences.

Les avantages obtenus avec un tel système sont identiques à ceux obtenus avec le système 30 de la figure 3.

Par ailleurs, l'invention s'applique également aux systèmes dans lesquels certaines cellules sont sectorisées, chaque secteur étant muni de moyens d'émission/réception de sorte qu'il est équivalent à une cellule. C'est dans ce sens général que l'on entend le mot "cellule" dans tout ce qui précède.

En outre, deux motifs qualifiés d'"adjacents" sont tels qu'ils se trouvent à côté l'un de l'autre, c'est-à-dire que d'une part ils ne sont pas séparés par un autre motif, mais que d'autre part, ils n'ont pas nécessairement une frontière commune. De même, les cellules d'un même motif n'ont pas nécessairement de frontière commune.

Les cellules d'un même motif ont été représentées sous forme d'hexagones et toutes identiques. Toutefois, une telle représentation est schématique, puisque les contours des cellules peuvent être quelconques et qu'il n'est pas nécessaires que toutes les cellules soient identiques par leur superficie et par leur forme.

Il n'est pas non plus nécessaire que tous les jeux de fréquences comportent exactement le même nombre de fréquences.

Enfin, on pourra remplacer tout moyen par un moyen équivalent sans sortir du cadre de l'invention.

## Revendications

1. Système cellulaire de radiocommunications mobiles comprenant une pluralité de cellules regroupées en motifs identiques (M) d'au moins deux cellules chacun, répétés périodiquement dans l'espace, et tel que :
- chaque cellule est associée à des moyens d'émission/réception de base destinés à émettre ou à recevoir des signaux radio à destination ou en provenance de stations mobiles lorsque ces dernières se trouvent dans une zone géographique coïncidant sensiblement avec la cellule associée auxdits moyens d'émission/réception,
- chacun desdits moyens d'émission/réception émet et reçoit des signaux radio par l'intermédiaire d'un jeu de fréquences associé à ladite cellule associée, et comportant au moins deux fréquences distinctes, toutes les fréquences de jeux de fréquences associés aux cellules d'un même motif étant deux à deux distinctes,
- la fréquence des signaux radio échangés entre une station mobile et les moyens d'émission/réception d'une cellule change au cours du temps de sorte que plusieurs des fréquences du jeu de fréquences associé à ladite cellule sont successivement utilisées au cours de la transmission desdits signaux radio,
- les jeux de fréquences associés à deux cellules quelconques (A1, A7) appartenant à des motifs (M) distincts et adjacents, et occupant à l'intérieur de ces motifs respectifs la même position par rapport aux autres cellules de ces motifs, ces deux cellules étant dites de même rang, sont partiellement identiques, c'est-à-dire qu'ils comportent au moins une fréquence identique et au moins une fréquence distincte,
ledit système étant **caractérisé en ce que** le plan de ce système de radiocommunications mobiles est obtenu en superposant les plans de plusieurs systèmes de radiocommunications mobiles ayant chacun un nombre différent de cellules par motif, ces systèmes de radiocommunications mobiles étant des systèmes classiques, c'est-à-dire dans lesquels les jeux de fréquences associés à des cellules de même rang sont identiques.

2. Système selon la revendication 1, **caractérisé en ce que** ledit motif (M) étant un motif à N cellules, il existe P motifs à N cellules pour lesquels les jeux de fréquences associés aux cellules de même rang sont partiellement identiques.

3. Système selon la revendication 2, **caractérisé en ce que** N et P sont premiers entre eux.

4. Système selon l'une des revendications 2 ou 3 **caractérisé en ce que** N est égal à 7 et P est égal à 9.

5. Système selon l'une des revendications 2 à 4 **caractérisé en ce que** chaque cellule dudit motif à N cellules est associée à au moins trois fréquences et **en ce que** les jeux partiellement identiques de deux cellules de même rang appartenant à des motifs adjacents diffèrent par une seule fréquence.

6. Système selon la revendication 1 **caractérisé en ce que** ledit motif (M) étant un motif à N cellules, il existe P*Q motifs à N cellules pour lesquels les jeux de fréquences associés aux cellules de même rang sont partiellement identiques.

7. Système selon la revendication 6 **caractérisé en ce que** N est égal à 9, P est égal à 4 et Q est égal à 13.

8. Système selon l'une des revendications 6 ou 7 **caractérisé en ce que** chaque cellule dudit motif à N cellules est associée à au moins trois fréquences et **en ce que** les jeux partiellement identiques de deux cellules de même rang appartenant à des motifs adjacents diffèrent par deux fréquences.

9. Système selon l'une des revendications 1 à 8 **caractérisé en ce que** la répétition desdits motifs est régulière.

10. Système selon l'une des revendications 1 à 9 **caractérisé en ce que**, lorsqu'une fréquence, dite fréquence de signalisation, est réservée en partie à la transmission de signaux de signalisation entre une station mobile et des moyens d'émission/ réception de base, la fréquence de transmission desdits signaux de signalisation est toujours ladite fréquence de signalisation et ne change pas au cours de la transmission desdits signaux de signalisation.

11. Système selon l'une des revendications 1 à 10 **caractérisé en ce qu'**il utilise le principe de l'accès multiple à répartition dans le temps.

12. Système selon l'une des revendications 1 à 11, **caractérisée en ce que** la succession dans le temps desdites fréquences est cyclique et suivant un cycle prédéterminé.

13. Organe d'exploitation d'un système cellulaire de radiocommunications mobiles selon l'une des revendications 1 à 12, comprenant des moyens d'attribution de fréquences à chacune des cellules dudit système, **caractérisé en ce que** lesdits moyens d'attribution sont tels que les jeux de fréquences associés à deux cellules quelconques appartenant à des motifs distincts et adjacents, et occupant à l'intérieur de ces motifs respectifs la même position par rapport aux autres cellules de ces motifs, ces deux cellules étant dites de même rang, sont partiellement identiques, c'est-à-dire qu'ils comportent au moins une fréquence identique et au moins une fréquence distincte, et tels que le plan de ce système de radiocommunications mobiles est obtenu en superposant les plans de plusieurs systèmes de radiocommunications mobiles ayant chacun un nombre différent de cellules par motif, ces systèmes de radiocommunications mobiles étant des systèmes classiques, c'est-à-dire dans lesquels les jeux de fréquences associés à des cellules de même rang sont identiques.

## Patentansprüche

1. Zellulares Mobilfunk-Kommunikationssystem mit einer Mehrzahl von Zellen, zusammengefasst zu identischen Mustern (M) von jeweils wenigstens zwei Zellen, die sich im Raum periodisch wiederholen, derart, dass:
- jede Zelle Basis-Sende-/Empfangsmitteln zugeordnet ist, die vorgesehen sind, um Funksignale zu empfangen, die für Mobilstationen bestimmt sind oder von Mobilstationen kommen, wenn sich letztere in einer geografischen Zone befinden, die im wesentlichen mit der den Sender-/Empfangsmitteln zugeordneten Zelle übereinstimmt,
- jedes der Sende-/Empfangsmittel Funksignale auf einem der zugeordneten Zelle zugeordneten Satz von Frequenzen sendet und empfängt, der wenigstens zwei unterschiedliche Frequenzen umfasst, wobei alle Frequenzen von den Zellen eines gleichen Musters zugeordneten Frequenzsätzen paarweise unterschiedlich sind,
- die Frequenz der zwischen einer Mobilstation und den Sende-/Empfangsmitteln einer Zelle ausgetauschten Funksignale im Laufe der Zeit variiert, so dass mehrere der Frequenzen des der Zelle zugeordneten Frequenzsatzes im Laufe der Übertragung der Funksignale nacheinander verwendet werden,
- die Frequenzsätze, die zwei beliebigen Zellen (A1,A7) zugeordnet sind, die zu verschiedenen und benachbarten Mustern (M) gehören und innerhalb dieser Muster in Bezug zu den anderen Zellen dieser Muster jeweils die gleiche Position einnehmen, wobei diese zwei Zellen als vom gleichen Rang bezeichnet werden, teilweise identisch sind, d. h., dass sie wenigstens eine identische Frequenz und wenigstens eine verschiedene Frequenz umfassen,
**dadurch gekennzeichnet, dass** der Plan dieses Mobilfunk-Kommunikationssystems erhalten wird durch Überlagern der Pläne von mehreren Mobilfunk-Kommunikationssystemen, die jeweils eine unterschiedliche Zahl von Zellen pro Muster haben, wobei diese Mobilfunk-Kommunikationssysteme herkömmliche Systeme sind, d. h. Systeme, in denen die Zellen von gleichen Rang zugeordneten Frequenzsätze identisch sind.

2. System nach Anspruch 1, **dadurch gekennzeichnet, dass**, wenn das Muster (M) ein Muster mit N Zellen ist, P Muster mit N Zellen existieren, für die die den Zellen von gleichem Rang zugeordneten Frequenzsätze teilweise identisch sind.

3. System nach Anspruch 2, **dadurch gekennzeichnet, dass** N und P untereinander teilerfremd sind.

4. System nach einem der Ansprüche 2 oder 3, **dadurch gekennzeichnet**, das N = 7 und P = 9 ist.

5. System nach einem der Ansprüche 2 bis 4, **dadurch gekennzeichnet, dass** jede Zelle des Musters mit N Zellen wenigstens drei Frequenzen zugeordnet ist, und dass die teilweise identischen Frequenzsätze von zwei Zellen gleichen Rangs, die zu benachbarten Mustern gehören, sich durch eine einzige Frequenz unterscheiden.

6. System nach Anspruch 1, **dadurch gekennzeichnet, dass**, wenn das Muster (M) ein Muster mit N Zellen ist, P*Q Muster mit N Zellen existieren, für die die den Zellen von gleichem Rang zugeordneten Frequenzsätze teilweise identisch sind.

7. System nach Anspruch 6, **dadurch gekennzeichnet, dass** N = 9, P = 4 und Q = 13 ist.

8. System nach einem der Ansprüche 6 oder 7, **dadurch gekennzeichnet, dass** jede Zelle des Musters mit N Zellen wenigstens drei Frequenzen zugeordnet ist, und dass die teilweise identischen Frequenzsätze von zwei Zellen mit gleichen Rang, die zu benachbarten Mustern gehören, sich durch zwei Frequenzen unterscheiden.

9. System nach einem der Ansprüche 1 bis 8, **dadurch gekennzeichnet, dass** die Wiederholung der Muster regelmäßig ist.

10. System nach einem der Ansprüche 1 bis 9, **dadurch gekennzeichnet, dass**, wenn eine Frequenz, als Signalisierungsfrequenz bezeichnet, teilweise der Übertragung von Signalisierungssignalen zwischen einer Mobilstation und Basis-Sende-/Empfangsmitteln vorbehalten ist, die Übertragungsfrequenz der Signalisierungssignale immer die Signalisierungsfrequenz ist und sich im Laufe der Übertragung der Signalisierungssignale nicht ändert.

11. System nach einem der Ansprüche 1 bis 10, **dadurch gekennzeichnet, dass** es das Prinzip des Mehrfachzugriffs im Zeitmultiplex anwendet.

12. System nach einer Ansprüche 1 bis 11, **dadurch gekennzeichnet, dass** die zeitliche Aufeinanderfolge der Frequenzen zyklisch ist und einem vorgegebenen Zyklus folgt.

13. Betriebsorgan für ein zellulares Mobilfunk-Kommunikationssystem nach einem der Ansprüche 1 bis 12, mit Mitteln zum Zuweisen von Frequenzen zu jeder der Zellen des Systems, **dadurch gekennzeichnet, dass** die Zuweisungsmittel derart sind, dass die Frequenzsätze, die zwei beliebigen, zu verschiedenen und benachbarten Mustern gehörenden Zellen zugeordnet sind, die jeweils innerhalb dieser Muster die gleiche Position in Bezug auf die anderen Zellen dieser Muster einnehmen, wobei diese zwei Zellen als von gleichen Rang bezeichnet werden, teilweise identisch sind, d. h., dass sie wenigstens eine identische Frequenz und eine verschiedene Frequenz umfassen, und derart, dass der Plan dieses Mobilfunk-Kommunikationssystems erhalten wird durch Überlagern der Pläne von mehreren Mobilfunk-Kommunikationssystemen mit jeweils einer anderen Zahl von Zellen pro Muster, wobei diese Mobilfunk-Kommunikationssysteme herkömmliche Systeme sind, d. h. Systeme, in denen die Frequenzsätze, die Zellen von gleichen Rang zugeordnet sind, identisch sind.

## Claims

1. Cellular mobile radio system comprising a plurality of cells grouped into identical patterns (M) each of at least two cells repeated periodically in space and such that:
- each cell is associated with base transceiver means adapted to send radio signals to or to receive radio signals from mobile stations when the latter are located in a geographical area substantially coincident with the cell associated with said transceiver means,
- each of said transceiver means sends and receives radio signals using a set of frequencies associated with said associated cell and including at least two different frequencies, all the frequencies of sets of frequencies associated with cells of the same pattern being different,
- the frequency of the radio signals exchanged between a mobile station and the transceiver means of a cell changes in time with the result that several frequencies of the set of frequencies associated with said cell are used successively during the transmission of said radio signals,
- the sets of frequencies associated with any two like cells (A1, A7) of different and adjacent patterns (M) and occupying inside said respective patterns the same position relative to the other cells of the patterns, are partially identical, i.e. include at least one identical frequency and at least one different frequency,
said system being **characterized in that** the plan for this mobile radio system is obtained by superposing the plans of several mobile radio systems each having a different number of cells in each pattern, these mobile radio systems being conventional systems, i.e. systems in which the sets of frequencies associated with like cells are identical.

2. System according to claim 1 **characterized in that**, said pattern (M) being a pattern of N cells, there are P patterns of N cells for which the sets of frequencies associated with like cells are partially identical.

3. System according to claim 2 **characterized in that** N and P are numbers with no common factor.

4. System according to claim 2 or claim 3 **characterized in that** N is equal to 7 and P is equal to 9.

5. System according to any one of claims 2 to 4 **characterized in that** each cell of said pattern of N cells is associated with at least three frequencies and **in that** the partially identical sets of two like cells belonging to adjacent patterns differ by one frequency only.

6. System according to claim 1 **characterized in that**, said pattern (M) being a pattern of N cells, there are P*Q patterns of N cells for which the sets of frequencies associated with like cells are partially identical.

7. System according to claim 6 **characterized in that** N is equal to 9, P is equal to 4 and Q is equal to 13.

8. System according to claim 6 or claim 7 **characterized in that** each cell of said pattern of N cells is associated with at least three frequencies and **in that** the partially identical sets of two like cells belonging to adjacent patterns differ by two frequencies.

9. System according to any of claims 1 to 8 **characterized in that** said patterns are repeated regularly.

10. System according to any of claims 1 to 9 **characterized in that** if a signalling frequency is partly reserved for transmission of signalling between a mobile station and base transceiver means, the frequency at which said signalling is transmitted is always said signalling frequency and does not change during transmission of said signalling.

11. System according to any of claims 1 to 10 **characterized in that** it uses the principle of time division multiple access.

12. System according to any of claims 1 to 11 **characterized in that** the succession of said frequencies over time is cyclical and in accordance with a predetermined cycle.

13. Operation unit of a cellular mobile radio system according to any of claims 1 to 12 comprising means for assigning frequencies to each cell of said system, **characterized in that** said assignment means are such that the sets of frequencies associated with any two like cells, i.e. cells belonging to different and adjacent patterns and occupying within the respective patterns the same position relative to the other cells of the patterns, are partly identical, i.e. comprise at least one identical frequency and at least one different frequency, and such that the plan for this mobile radio system is obtained by superposing the plans of several mobile radio systems each having a different number of cells in each pattern, these mobile radio systems being conventional systems, i.e. systems in which the sets of frequencies associated with like cells are identical.
